# EUROPÄISCHE PATENTSCHRIFT

(11) **EP 1 312 521 B1**
(45) Veröffentlichungstag und Bekanntmachung des Hinweises auf die Patenterteilung: **21.06.2006**
(21) Anmeldenummer: 02025308.4
(22) Anmeldetag: 13.11.2002
(51) Int. Cl.: G01N 21/45, B60S 1/08

(54) **Sensoreinrichtung**
Sensor device
Dispositif de détection

(30) Priorität: 15.11.2001 DE 10156241
(43) Veröffentlichungstag der Anmeldung: 21.05.2003
(73) Patentinhaber: Hella KGaA Hueck & Co., 59552 Lippstadt (DE)
(72) Erfinder: Schulte, Michael, 33106 Paderborn (DE)

(56) Entgegenhaltungen:
- WO-A-99/09681
- DE-A- 19 933 640
- DE-C- 19 734 833
- US-A- 5 639 393
- US-B1- 6 299 319

## Beschreibung

Die Erfindung bezieht sich auf eine Sensoreinrichtung zur Erfassung der Benetzung der Außenseite einer Kraftfahrzeugscheibe mit Flüssigkeit und/oder zur Erfassung der Lichtverhältnisse außerhalb der Scheibe. Eine derartige Sensoreinrichtung besteht aus einem Gehäuse, in dessen Grundplatte mindestens ein Lichtein- un gegebenenfalls mindestens ein Lichtauskoppelelement angeordnet ist, wobei das Gehäuse mit seiner Grundplatte direkt oder über ein optisches Koppelmedium an der Scheibeninnenseite anliegt. Innerhalb des Gehäuses ist mindestens ein Lichtempfänger und gegebenenfalls mindestens ein lichtaussendender Sender untergebracht, wobei der wenigstens eine Lichtempfänger und der wenigstens eine Sender positionsgenau zu dem mindestens einen Lichtein- und gegebenenfalls Lichtauskoppelelement angeordnet ist.

Aus der DE 198 39 273 A1 ist ein derartiger Sensor bekannt. Bei diesem Sensor sind der Sender und der Empfänger auf einer Leiterplatte (Platine) angeordnet. Wie diese Leiterplatte - und damit der Sender und der Empfänger - im dem Gehäuse positionsgenau befestigt ist, geht aus der DE 198 39 273 A1 allerdings nicht hervor. An der Scheibeninnenseite wird dieser Sensor befestigt, indem die Grundplatte über eine transparente Klebefolie an der Scheibeninnenseite angeklebt wird. Diese Art der Befestigung hat jedoch den Nachteil, daß der Sensor von der Scheibe nicht zerstörungsfrei entfernt werden kann.

Aus der EP 1 040 962 A2 ist es bekannt, an der Scheibeninnenseite ein Befestigungsmittel zu montieren, um die Grundplatte des Sensorgehäuses an der Scheibeninnenseite zur Anlage zu bringen, wobei die Grundplatte des Gehäuses über mindestens ein federelastisches Spannmittel, das zwischen dem Befestigungsmittel und dem Gehäuse vorgespannt angeordnet ist, gegen die Scheibeninnenseite gedrückt wird. Dabei besteht das Befestigungsmittel aus einem auf die Scheibeninnenseite aufgeklebten Ring, in dessen Ausnehmung das Sensorgehäuse zumindest teilweise aufgenommen wird. Diese Art der Befestigung hat den Vorteil, daß nach dem Lösen des federelastischen Spannmittels der Sensor einfach und zerstörungsfrei von der Scheibe entfernt werden kann. Der Aufbau des Sensorgehäuses geht aus der EP 1 040 962 A2 allerdings nicht hervor.

Eine Sensoreinrichtung gemäß dem Oberbegriff des Auspruchs 1 ist aus dem Dokument DE-A-19933640 bekannt. Es ist die Aufgabe der Erfindung, eine Sensoreinrichtung zu schaffen, die einfach herzustellen und zu montieren ist, wobei der wenigstens eine Lichtempfänger gegebenenfalls der wenigstens ein Sender in einfacher Weise zuverlässig in bezug auf das wenigstens eine Lichtein- und gegebenenfalls Lichtauskoppelelement positionierbar sein soll.

Diese Aufgabe wird durch die kennzeichnenden Merkmale des Patentanspruches 1 gelöst. Die sich daran anschließenden Unteransprüche enthalten vorteilhafte Ausführungsformen.

Das Sensorgehäuse besteht aus zwei Gehäusehälften, nämlich einer ersten Gehäusehälfte, welche die Grundplatte aufweist, in der das mindestens eine Lichtein- und gegebenenfalls Auskoppelelement angeordnet ist und einer zweiten Gehäusehälfte, in der der wenigstens eine Lichtempfänger und gegebenenfalls der wenigstens eine Sender angeordnet ist. Erfindungsgemäß sind die beiden Gehäusehälften so ausgebildet, daß sie auch im zusammengesetzten Zustand senkrecht zur Grundplatte zumindest in einem gewissen Bereich gegeneinander verschiebbar sind. Im an die Scheibe montierten Zustand drückt das Spannmittel zur axialen Positionierung des wenigstens einen Lichtempfängers und gegebenenfalls des wenigstens einen Senders die beiden Gehäusehälften gegen mindestens einen an der ersten und/oder zweiten Gehäusehälfte angeordneten Anschlag zusammen.

In einer bevorzugten Ausführungsform ist das Spannmittel in Form einer U-förmigen Blattfeder zwischen dem an der Scheibe angeordneten Befestigungsmittel und der zweiten Gehäusehälfte angeordnet. In einer alternativen Ausführungsform ist das federelastische Spannmittel zwischen dem Befestigungsmittel und dem Fuß eines an der Scheibeninnenseite angeordneten Innenspiegels vorgespannt, wobei das Sensorgehäuse in dem Fuß des Innenspiegels integriert ist. In einer weiteren Ausführungsform ist das Sensorgehäuse zwar ebenfalls im Fuß des Innenspiegels integriert, allerdings ist das federelastische Spannelement zwischen dem Sensorgehäuse und dem Fuß des Innenspiegels vorgespannt, wobei der Fuß des Innenspiegels an dem an der Scheibe angeordneten Befestigungsmittel festgelegt ist.

Das federelastische Spannelement bewirkt zwei Dinge, zum einen die Anpressung des Sensorgehäuses an die Scheibeninnenseite und zum anderen die axiale Positionierung des wenigstens einen Lichtempfängers und gegebenenfalls einen Senders, der in der zweiten Gehäusehälfte angeordnet ist, indem die beiden Gehäusehälften bis zu einem Anschlag gegeneinander gedrückt werden. Damit hält das federelastische Spannelement bei gleichzeitiger axialer Positionierung des wenigstens einen Lichtempfängers und gegebenenfalls Senders auch die beiden Gehäusehälften zusammen.

Mit axialer Positionierung ist die Positionierung senkrecht zur Grundplatte des Sensorgehäuses gemeint. Die Art und Weise, wie der wenigstens eine Lichtempfänger und gegebenenfalls der wenigstens eine Sender in der zweiten Gehäusehälfte angeordnet ist, ist für die Grundidee der Erfindung zunächst einmal nicht von Bedeutung.

In einer vorteilhaften Ausführungsform der Erfindung werden die beiden Gehäusehälften zur Ausbildung eines zumindest teilweise geschlossenen Gehäuses bereits vor der Montage an die Scheibeninnenseite zusammengesetzt, wobei die beiden Gehäusehälften in diesem Zustand über eine Rastverbindung mit axialem Bewegungsspiel verbunden sind. Dabei ist bei einer Rastverbindung das Bewegungsspiel in Fügerichtung der beiden Gehäusehälften zwangsweise gegeben, da die beiden Gehäusehälften zur Bewirkung der Rastverbindung über den Rastpunkt hinaus zusammengedrückt werden müssen. Die mit diesem Bewegungsspiel verbundene, störende Positionsungenauigkeit des wenigstens einen Senders und/oder des wenigstens einen Lichtempfängers wird dadurch eliminiert, daß die beiden Gehäusehälften erfindungsgemäß über das federelastische Spannmittel gegen den mindestens einen gehäuseseitigen Anschlag zusammengedrückt werden.

In einer vorteilhaften Ausführungsform ist es vorgesehen, den wenigstens einen Sender und/oder den wenigstens einen Lichtempfänger auf einer Leiterplatte anzuordnen, die dann wiederum in der zweiten Gehäusehälfte fixiert ist. Auf diese Weise sind beim Zusammensetzen der beiden Gehäusehälften nur 2 Teile zu handhaben, nämlich die erste Gehäusehälfte mit der Grundplatte und den darin integrierten Lichtein- und Lichtauskoppelelementen und die zweite Gehäusehälfte mit der darin fixierten Leiterplatte. Dabei liegt die Leiterplatte vorzugsweise auf einer Auflagefläche der zweiten Gehäusehälfte auf, wo sie über in die zweite Gehäusehälfte eingeformte elektrische Kontaktstifte gehalten wird, die in die Leiterplatte eingepresst sind. Die elektrische Kontaktierung der Leiterplatte dient damit gleichzeitig ihrer mechanischen Fixierung.

Um Fertigungstoleranzen in der Dicke der Leiterplatte, die in der Größenordnung von einigen zehntel Millimeter liegen, ausgleichen zu können, ist das axiale Bewegungsspiel der beiden Gehäusehälften im verrasteten Zustand bewusst um mindestens diese Leiterplattendicken-Toleranz vergrößert. Durch das federelastische Spannelement wird die den Lichtein- und/oder Lichtauskoppelelementen zugewandte Seite der Leiterplatte, auf der der wenigstens eine Sender und/oder Lichtempfänger angeordnet ist, über die zweite Gehäusehälfte in jedem Fall gegen einen definierten Positionsanschlag gedrückt, wodurch der wenigstens eine Sender und/oder Lichtempfänger in zuverlässiger Weise axial zu den Lichtein- und gegebenenfalls Lichtauskoppelelementen positioniert wird.

Anhand der beigefügten Zeichnungen soll die Erfindung nachfolgend näher erläutert werden. Es zeigt:
- Figur 1: eine Draufsicht auf die Innenseite der ersten Gehäusehälfte des Sensors,
- Figur 2: einer Draufsicht auf die Außenseite der ersten Gehäusehälfte des Sensors,
- Figur 3: eine perspektivische Darstellung der ersten Gehäusehälfte,
- Figur 4: eine perspektivische Darstellung der zweiten Gehäusehälfte,
- Figur 5: eine perspektivische Darstellung des an der Scheibeninnenseite befestigten Sensorgehäuses,
- Figur 6: eine perspektivische Darstellung des zusammengesetzten Gehäuses,
- Figur 7: einen Schnitt durch den an der Scheibeninnenseite befestigten Sensor,
- Figur 8: eine perspektivische Darstellung des aufgeschnittenen Sensorgehäuses.

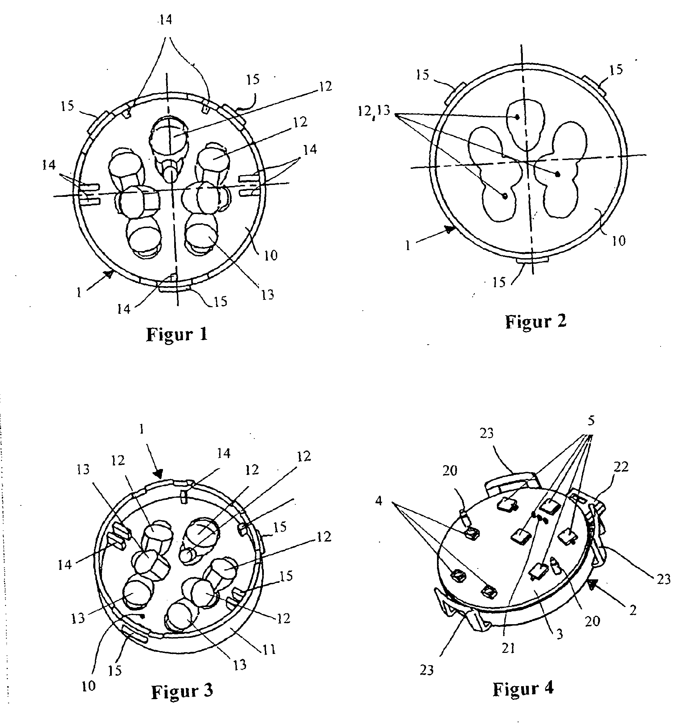

In Figur 1 ist eine Draufsicht auf die Innenseite der ersten Gehäusehälfte (1) des Sensors dargestellt. Die erste Gehäusehälfte (1) besteht aus einem einseitig offenen Hohlzylinder (11), dessen Stirnwandung die Grundplatte (10) ausbildet, welche an der Innenseite der Scheibe (7) zur Anlage gebracht wird. In dieser Grundplatte (10) sind die Lichteinkoppelelemente (12) und die Lichtauskoppelelemente (13) für eine Regensensorik sowie die Lichteinkoppelelemente (12) für eine Lichtsensorik einstückig integriert. Innenseitig am Rand der Grundplatte (10) weist die erste Gehäusehälfte (1) Anschläge in Form von Stegen (14) auf, gegen die eine die Sender und Lichtempfänger (4,5) tragende Leiterplatte (3) im an die Scheibeninnenseite montierten Zustand des Sensors gedrückt wird. Zur Verbindung mit der zweiten Gehäusehälfte (2) weist die erste Gehäusehälfte (1) Rastnasen (15) auf, die im verrasteten Zustand von am zweiten Gehäuseteil (2) angeordneten Rastbügeln (23) übergriffen werden.

Die erste Gehäusehälfte (1) mit den darin integrierten Lichtein- und Lichtauskoppelelementen (12,13) und den Stegen (14) wird vorzugsweise einstückig aus Kunststoff im Spritzgießverfahren hergestellt.

In Figur 4 ist eine perspektivische Darstellung der zweiten Gehäusehälfte (2) gezeigt. Die zweite Gehäusehälfte (2) ist als flacher Hohlzylinder ausgebildet, der zur Aufnahme der kreisrunden Leiterplatte (3) dient. Dabei bildet die zweite Gehäusehälfte (2) eine Auflagefläche für die Leiterplatte (3) aus. Im dargestellten Beispiel wir die Auflagefläche von der umlaufenden Stirnfläche (24) des Hohlzylinders gebildet. Zur positionsgenauen Aufnahme der Leiterplatte (3) weist die zweite Gehäusehälfte (2) zwei sich senkrecht zur Grundplatte (10) erstreckende Positionierstifte (20) auf, die in entsprechende Positionierbohrungen der Leiterplatte (3) eingreifen. Damit ist ein Verdrehen und/oder ein Verschieben der Leiterplatte (3) gegenüber der zweiten Gehäusehälfte (2) nicht möglich. Zur axialen Fixierung der auf der Auflagefläche (24) aufliegenden Leiterplatte (3) wird diese über in die zweite Gehäusehälfte (2) eingeformte elektrische Kontaktstifte (21) gehalten, die in die Leiterplatte (3) eingepresst werden und ansonsten der elektrischen Kontaktierung der Leiterplatte (3) dienen. Zum Anschluß der elektrischen Kontakte an einen externen Stecker weist die zweite Gehäusehälfte (2) einen die elektrischen Kontaktstifte umfassenden Steckerkorb (22) auf. Um ein Verdrehen und/oder ein Verschieben der zweiten Gehäusehälfte (2) gegenüber der ersten Gehäusehälfte (1) zu verhindern, greifen die beiden Positionierstifte (20) zusätzlich in entsprechende Positionieröffnungen der ersten Gehäusehälfte (1) ein. Darüber hinaus wird ein Verschieben der beiden Gehäusehälften (1,2) gegeneinander in der Ebene parallel zur Grundplatte (10) verhindert, indem die beiden Gehäusehälften zumindest in einem Teilbereich in Richtung senkrecht zur Grundplatte (10) ineinander verschachtelt angeordnet sind, wobei der Innendurchmesser der ersten Gehäusehälfte (1) gleich oder geringfügig kleiner ist als der Außendurchmesser der zweiten Gehäusehälfte (2) oder umgekehrt. Das Verdrehen der beiden Gehäusehälften (1,2) gegeneinander kann auch oder zusätzlich durch die Rastverbindung verhindert werden, indem die Rastnasen (15) und die Rastbügel (23) entsprechend ausgebildet werden.

Die der Leiterplatte (3) abgewandte Stirnseite des Hohlzylinders der zweiten Gehäusehälfte (2) bildet eine geschlossene Gehäuserückseite aus, an der sich das federelastische Spannelement (8) abstützt.

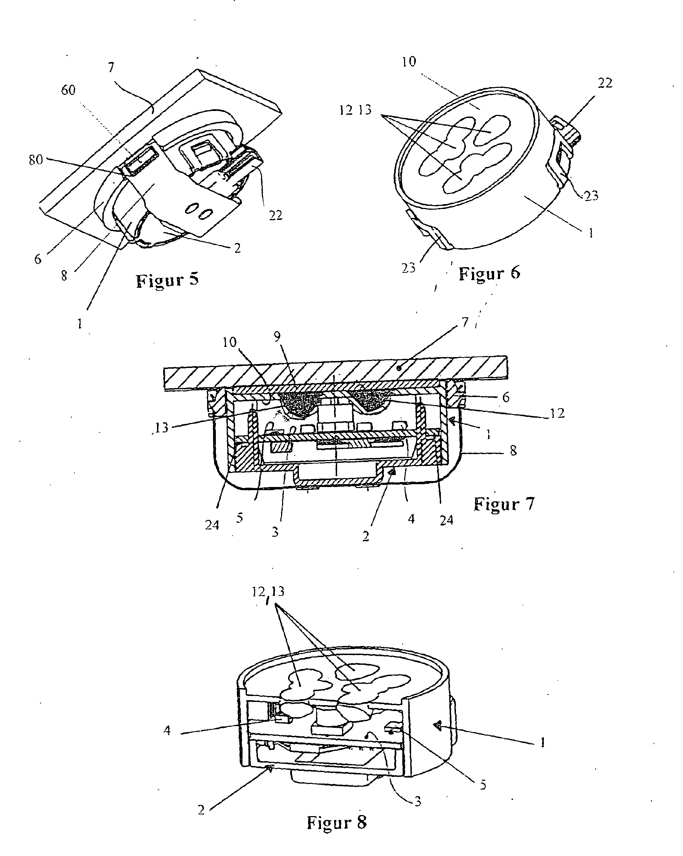

Figur 5 zeigt eine perspektivische Darstellung des an der Scheibeninnenseite befestigten Sensorgehäuses. Das federelastische Spannelement (8), das zwischen dem zweiten Gehäuseteil (2) und einem an der Scheibeninnenseite festgelegten Befestigungselement (6) angeordnet ist, ist vorzugsweise als U-förmige Blattfeder ausgebildet, die einerseits fest an der Rückseite der zweiten Gehäusehälfte (2) fixiert ist und andererseits über eine Rastverbindung mit dem Befestigungsmittel (6) verbunden ist.

Das Befestigungsmittel (6) ist vorzugsweise als Ring aus Metall oder Kunststoff ausgebildet und verfügt über ein Rastelement (60), das mit einer Rastausnehmung (80) der U-förmigen Blattfeder (8) zur Bewirkung der Rastverbindung in Eingriff steht.

Um die die Lichtein- und Auskoppelelemente (12,13) tragende Grundplatte (10) optimal, insbesondere blasenfrei, an der Scheibeninnenseite zur Anlage zu bringen, ist zwischen beiden ein transparentes Koppelmedium, z.B. aus Silikon, angeordnet.

### Bezugszeichenliste

1) Erste Gehäusehälfte
10) Grundplatte der ersten Gehäusehälfte
11) Hohlzylinder der ersten Gehäusehälfte
12) Lichteinkoppelelemente in der Grundplatte
13) Lichtauskoppelelemente in der Grundplatte
14) Stege als Anschlag in der ersten Gehäusehälfte
15) Rastnasen an der ersten Gehäusehälfte

2) Zweite Gehäusehälfte
20) Positionierstifte in der zweiten Gehäusehälfte
21) Kontaktstifte, welche in die zweite Gehäusehälfte eingeformt sind
22) Steckerkorb an der zweiten Gehäusehälfte
23) Rastbügel an der zweiten Gehäusehälfte
24) Auflagefläche für die Leiterplatte

3) Leiterplatte
4) Sender
5) Empfänger

6) Befestigungsring
60) Rastelement am Befestigungsring

7) Scheibe

8) Federelastisches Spannelement
80) Rastausnehmung am Spannelement

9) Koppelmedium

## Patentansprüche

1. Sensoreinrichtung zur Erfassung der Benetzung der Außenseite einer Kraftfahrzeugscheibe (7) mit Flüssigkeit und/oder zur Erfassung der Lichtverhältnisse außerhalb der Scheibe (7) bestehend aus
- einer Scheibe (7)
- einem Gehäuse (1,2), in dessen Grundplatte (10) mindestens ein Lichtein- und gegebenenfalls Lichtauskoppelelement (12,13) angeordnet ist, wobei das Gehäuse mit seiner Grundplatte (10) direkt oder über eine optisches Koppelmedium (9) an der Scheibeninnenseite anliegt,
- mindestens einem in dem Gehäuse angeordneten Lichtempfänger (5) und gegebenenfalls mindestens einem lichtaussendenden Sender (4), wobei der wenigstens eine Lichtemplänger (5) und gegebenenfalls der wenigstens eine Sender (4) positionsgenau zu dem mindestens einen Lichtein- und gegebenenfalls Lichtauskoppelelement (12,13) angeordnet ist,
- einem an der Scheibeninnenseite festgelegten ringförmigen Befestigungselement (6),
wobei die Grundplatte (10) des Gehäuses über mindestens ein federelastisches Spannmittel (8) gegen die Scheibeninnenseite gedrückt wird, und
- das Gehäuse aus zwei Gehäusehälften (1,2) besteht, nämlich
einer ersten Gehäusehälfte (1), welche die Grundplatte (10) aufweist, in der das mindestens eine Lichtein- und gegebenenfalls Auskoppelelement (12,13) angeordnet ist und
einer zweiten Gehäusehälfte (2), in der der wenigstens eine Lichtempfänger (5) und gegebenenfalls der wenigstens eine Sender (4) angeordnet ist, und das Spannmittel (8) zur Positionierung des wenigstens einen Lichtempfängers (5) und gegebenenfalls des wenigstens einen Senders (4) bezüglich einer Position senkrecht zur Grundplatte (10) im an die Scheibe (7) montierten Zustand die beiden Gehäusehälften (1,2) gegen mindestens einen an der ersten und/oder zweiten Gehäusehälfte (1,2) angeordneten Anschlag (14) drückt - das federelastische Spannmittel (8), das zwischen dem zweiten Gehäuseteil (2) und dem an der Scheibeninnenseite festgelegten Befestigungselement (6) angeordnet ist, einerseits an der Rückseite der zweiten Gehäusehälfte (2) fixiert ist und andererseits mit dem Befestigungsmittel (6) verbunden ist,
**dadurch gekennzeichnet, dass**
- die beiden Gehäusehälften (1,2) im zusammengesetzten Zustand, bevor sie durch das Spannmittel (8) zusammengedrückt worden sind senkrecht zur Grundplatte (10) gegeneinander verschiebbar sind.

2. Sensoreinrichtung nach Anspruch 1,
**dadurch gekennzeichnet, daß**
die beiden Gehäusehälften (1,2) im zusammengesetzten Zustand über eine Rastverbindung mit Bewegungsspiel senkrecht zur Grundplatte (10) verbunden sind.

3. Sensoreinrichtung nach Anspruch 1 oder 2,
**dadurch gekennzeichnet, daß**
die erste Gehäusehälfte (1) mehrere, vorzugsweise umfangsseitig verteilt angeordnete Stege (14) als axiale Anschlagselemente aufweist.

4. Sensoreinrichtung nach Anspruch 3,
**dadurch gekennzeichnet, daß**
die Stege (14) gemeinsam mit der ersten Gehäusehälfte (1) aus Kunststoff im Spritzgießverfahren einstückig hergestellt sind.

5. Sensoreinrichtung nach einem der vorstehenden Ansprüche,
**dadurch gekennzeichnet, daß**
die zweite Gehäusehälfte (2) eine Leiterplatte (3) aufweist, auf deren der Grundplatte (10) zugewandten Seite der wenigstens eine Sender (4) und/oder der wenigstens eine Lichtempfänger (5) angeordnet ist.

6. Sensoreinrichtung nach Anspruch 5,
**dadurch gekennzeichnet, daß**
die Leiterplatte (3) in der zweiten Gehäusehälfte (2) ortsfest angeordnet ist.

7. Sensoreinrichtung nach Anspruch 6,
**dadurch gekennzeichnet, daß**
die Leiterplatte (3) auf einer Auflagefläche (24) der zweiten Gehäusehälfte (2) aufliegt, wobei die Leiterplatte (3) in dieser Position über in die zweite Gehäusehälfte (2) eingeformte elektrische Kontaktstifte (21) gehalten wird, die in die Leiterplatte (3) eingepresst oder umspritzt sind.

8. Sensoreinrichtung nach einem der vorstehenden Ansprüche,
**dadurch gekennzeichnet, daß**
eine der beiden Gehäusehälften (1,2) mindestens einen sich senkrecht zur Grundplatte (10) erstreckenden Positionierstift (20) zur Positionierung der beiden Gehäusehälften (1,2) zueinander in Bezug auf die Ebene parallel zur Grundplatte (10) aufweist, der in eine entsprechende Positionieröffnung der jeweils anderen Gehäusehälfte eingreift.

9. Sensoreinrichtung nach Anspruch 8,
**dadurch gekennzeichnet, daß**
der mindestens eine Positionierstift (20) mit der zweiten Gehäusehälfte (2) aus Kunststoff im Spritzgießverfahren einstückig hergestellt ist, wobei der mindestens eine Positionierstift (20) auch durch eine Positionierbohrung der Leiterplatte (3) hindurch geführt ist.

10. Sensoreinrichtung nach Anspruch 2,
**dadurch gekennzeichnet, daß**
die Positionierung der beiden Gehäusehälften (1,2) zueinander in Bezug auf die Ebene parallel zur Grundplatte (10) durch die Rastverbindung (15, 23) bewirkt wird.

11. Sensoreinrichtung nach einem der vorstehenden Ansprüche,
**dadurch gekennzeichnet, daß**
die beiden Gehäusehälften (1,2) zumindest in einem Teilbereich in Richtung senkrecht zur Grundplatte (10) ineinander verschachtelt angeordnet sind, wobei der Innendurchmesser der ersten Gehäusehälfte (1) gleich oder geringfügig kleiner ist als der Außendurchmesser der zweiten Gehäusehälfte (2) oder umgekehrt, so daß eine Verschiebung der beiden Gehäusehälften gegeneinander in der Ebene parallel zur Grundplatte ausgeschlossen ist.

12. Sensoreinrichtung nach Anspruch 11,
**dadurch gekennzeichnet, daß**
die beiden Gehäusehälften (1,2) als Hohlzylinder ausgebildet sind, wobei der Innendurchmesser der ersten Gehäusehälfte gleich oder geringfügig kleiner ist als der Außendurchmesser der zweiten Gehäusehälfte oder umgekehrt.

13. Sensoreinrichtung einem der vorstehenden Ansprüche,
**dadurch gekennzeichnet, daß**
das federelastische Spannmittel (8) fest mit der zweiten Gehäusehälfte (2) verbunden und zwischen der zweiten Gehäusehälfte (2) und einem an der Scheibeninnenseite montierten Befestigungsmittel (6) vorgespannt angeordnet ist.

## Claims

1. Sensor device for detecting the wetting of the outside of a motor vehicle windscreen (7) with liquid and/or for detecting the light conditions outside the windscreen (7), comprising
- a windscreen (7)
- a housing (1, 2) in whose base plate (10) is arranged at least one light coupling-in element and possibly light coupling-out element (12, 13), whereby the housing lies with its base plate (10), either directly or via an optical coupling medium (9), against the inside of the windscreen,
- at least one light sensor (5) arranged in the housing and possibly at least one light-emitting transmitter (4), whereby the at least one light sensor (5) and possibly the at least one transmitter (4) is arranged precisely positioned relative to the at least one light coupling-in element and possibly coupling-out element (12, 13),
- a ring-shaped fixing element (6) attached to the inside of the windscreen, whereby the base plate (10) of the housing is pressed by means of an elastic clamping means (8) against the inside of the windscreen, and
- the housing comprises two housing halves (1, 2), namely a first housing half (1) which has the base plate (10) and in which the at least one light coupling-in and possibly coupling-out element (12, 13) is arranged and a second housing half (2) in which the at least one light sensor (5) and possibly the at least one transmitter (4) is arranged and, for positioning the at least one light sensor (5) and possibly the at least one transmitter (4) relative to a position perpendicular to the base plate (10) in the state mounted on the windscreen (7), the clamping means (8) presses the two housing halves (1, 2) against at least one stop (14) arranged on the first and/or second housing half (1, 2), the elastic clamping means (8), which is arranged between the second housing part (2) and the fixing element (6) fixed on the inside of the windscreen, is fixed, on the one hand, on the rear side of the second housing half (2) and, on the other hand, is connected to the fixing means (6),
- **characterised in that** both housing halves (1, 2) are displaceable relative to each other perpendicular to the base plate (10) in the assembled state before they are pressed together by the clamping means (8).

2. Sensor device according to claim 1, **characterised in that** the two housing halves (1, 2) are connected in the assembled state by means of a latching connection with movement play perpendicular to the base plate (10).

3. Sensor device according to claim 1 or 2, **characterised in that** the first housing half (1) has a plurality of webs (14) arranged distributed preferably circumferentially as axial stop elements.

4. Sensor device according to claim 3, **characterised in that** the webs (14) are formed integrally with the first housing half (1) from plastics in the injection moulding process.

5. Sensor device according to one of the preceding claims, **characterised in that** the second housing half (2) has a circuit board (3) on whose side facing towards the base plate (10), the at least one transmitter (4) and/or the at least one light sensor (5) is arranged.

6. Sensor device according to claim 5, **characterised in that** the circuit board (3) is arranged fixed in the second housing half (2).

7. Sensor device according to claim 6, **characterised in that** the circuit board (3) lies on a support surface (24) of the second housing half (2), whereby the circuit board (3) is held in this position by means of electrical contact pins (21) formed into the second housing half (2), said pins being pressed or injection moulded into the circuit board (3).

8. Sensor device according to one of the preceding claims, **characterised in that** one of the two housing halves (1, 2) has at least one positioning pin (20) extending perpendicular to the base plate (10) for positioning the two housing halves (1, 2) relative to each other in relation to the plane parallel to the base plate (10), said pin engaging in a corresponding positioning opening in the respective other housing half.

9. Sensor device according to claim 8, **characterised in that** the at least one positioning pin (20) is manufactured integrally with the second housing half (2) from plastics in an injection moulding process, whereby the at least one positioning pin (20) is also fed through a positioning bore of the circuit board (3).

10. Sensor device according to claim 2, **characterised in that** the positioning of the two housing halves (1, 2) relative to each other in relation to the plane parallel to the base plate (10) is brought about by the latching connection (15, 23).

11. Sensor device according to one of the preceding claims, **characterised in that** the two housing halves (1, 2) are arranged nested in each other at least in a partial region in the direction perpendicular to the base plate (10), whereby the inner diameter of the first housing half (1) is the same as, or slightly smaller than, the outer diameter of the second housing half (2) or vice versa, so that displacement of the two housing halves relative to each other in the plane parallel to the base plate is prevented.

12. Sensor device according to claim 11, **characterised in that** the two housing halves (1, 2) are designed as a hollow cylinder, whereby the inner diameter of the first housing half is the same as, or slightly smaller than, the outer diameter of the second housing half or vice versa.

13. Sensor device according to one of the preceding claims, **characterised in that** the elastic clamping means (8) is firmly connected to the second housing half (2) and is arranged pretensioned between the second housing half (2) and a fixing means (6) mounted on the inside of the windscreen.

## Revendications

1. Dispositif de capteur en vue de la détection du mouillage du côté extérieur d'une vitre de véhicule (7) par un liquide et/ou en vue de la détection des conditions de lumière à l'extérieur de la vitre (7) ce composant
- d'une vitre (7),
- d'un boîtier (1,2), dans la platine (10) duquel est disposé au moins un élément de couplage de lumière et éventuellement de découplage de lumière (12,13), le boîtier avec sa platine (10) étant directement adjacent ou par l'intermédiaire d'un milieu de couplage optique (9) au côté interne de la vitre,
- d'au moins un récepteur de lumière (5) disposé dans le boîtier et éventuellement d'au moins un émetteur de lumière (4), et éventuellement le au moins un émetteur (4) étant disposé en position précise sur au moins un élément de couplage de lumière et éventuellement de découplage de lumière (12, 13),
- un élément de fixation (6) annulaire fixé au côté interne de la vitre, la base (10) du boîtier étant poussée par au moins un élément de tension élastique (8) contre le côté interne de la vitre, et
- le boîtier se compose de deux moitiés de boîtier (1,2), à savoir une première moitié de boîtier (1), qui présente la base (10), dans laquelle est disposé un élément de couplage de lumière et éventuellement de découplage de lumière (12, 13) et une seconde moitié de boîtier (2), dans laquelle est disposé au moins le récepteur de lumière (5) et éventuellement au moins un émetteur (4), et
- le moyen de tension (8) en vue du positionnement d'au moins un récepteur de lumière (5) et éventuellement d'au moins un émetteur (4) par rapport à une position verticale par rapport à la base (10) dans l'état monté sur la vitre (7) pousse les deux moitiés de boîtier (1,2) contre au moins une butée (14) disposée sur la première et/ou seconde moitié de boîtier (1,2),
- le moyen de tension élastique (8), qui est disposé entre la seconde partie de boîtier (2) et l'élément de fixation (6) fixé au côté interne de la vitre, est fixé d'une part au côté postérieur de la seconde moitié de boîtier (2) et d'autre part est relié au moyen de fixation (6),
**caractérisé en ce que**
- les deux moitiés de boîtier (1,2) dans l'état assemblé, avant qu'elles soient poussées l'une contre l'autre par le moyen de tension (8), sont déplaçables l'une contre l'autre perpendiculairement à la base (10).

2. Dispositif de capteur selon la revendication 1, **caractérisé en ce que** les deux moitiés de boîtier (1,2) dans l'état assemblé sont réunies par l'intermédiaire d'une liaison d'arrêt avec un jeu perpendiculaire à la base (10).

3. Dispositif de capteur selon la revendication 1 ou 2, **caractérisé en ce que** la première moitié de boîtier (1) présente plusieurs barrettes (14) de préférence disposées réparties à la périphérie en tant qu'éléments de butée axiaux.

4. Dispositif de capteur selon la revendication 3, **caractérisé en ce que** les barrettes (14) sont fabriquées unitairement conjointement avec la première moitié de boîtier (1) en matière plastique par injection.

5. Dispositif de capteur selon l'une des revendications précédentes, **caractérisé en ce que** la seconde moitié de boîtier (2) comporte une platine (3), sur le côté de laquelle tourné vers la base (10) est disposé au moins un émetteur (4) et/ou au moins un récepteur de lumière (5).

6. Dispositif de capteur selon la revendication 5, **caractérisé en ce que** la platine (3) est disposée en position fixe dans la seconde moitié de boîtier (2).

7. Dispositif de capteur selon la revendication 6, **caractérisé en ce que** la platine (3) repose sur une surface d'appui (24) de la seconde moitié de boîtier (2), la platine (3) étant maintenue dans cette position par l'intermédiaire de tiges de contact (21) électrique formées dans la seconde moitié de boîtier (2), qui sont pressées ou injectées dans la platine (3).

8. Dispositif de capteur selon l'une des revendications précédentes, **caractérisé en ce qu'**une des deux moitiés de boîtier (1,2) présente au moins une tige de positionnement (20) s'étendant perpendiculairement à la base (10) en vue du positionnement des deux moitiés de boîtier (1 ,2) par rapport au plan parallèle à la base (10), qui pénètre dans une ouverture de positionnement correspondante de l'autre moitié de boîtier.

9. Dispositif de capteur selon la revendication 8, **caractérisé en ce qu'**au moins une tige de positionnement (20) est fabriquée unitairement avec la seconde moitié de boîtier (2) en matière plastique par injection, la au moins une tige de positionnement (20) étant guidée également par un alésage de positionnement de la platine (3).

10. Dispositif de capteur selon la revendication 2, **caractérisé en ce que** le positionnement des deux moitiés de boîtier (1,2) l'une par rapport à l'autre par rapport au plan parallèle à la base (10) est provoqué par la liaison d'arrêt (15, 23).

11. Dispositif de capteur selon l'une des revendications précédentes, **caractérisé en ce que** les deux moitiés de boîtier (1,2) sont disposées intercalées l'une par l'autre au moins partiellement et perpendiculairement à la base (10), le diamètre interne de la première moitié de boîtier (1) étant égal ou légèrement inférieur au diamètre extérieur de la seconde moitié de boîtier (2) ou inversement, de sorte qu'un décalage des deux moitiés de boîtier l'une vers l'autre dans le plan parallèle à la base est exclu.

12. Dispositif de capteur selon la revendication 11, **caractérisé en ce que** les deux moitiés de boîtier (1,2) sont réalisées sous la forme de cylindres creux, le diamètre intérieur de la première moitié de boîtier étant égal ou légèrement inférieur au diamètre extérieur de la seconde moitié de boîtier ou inversement.

13. Dispositif de capteur selon une des revendications précédentes, **caractérisé en ce que** l'élément de tension élastique (8) est relié à la seconde moitié de boîtier (2) et est disposé avec précontrainte entre la seconde moitié de boîtier (2) et un moyen de fixation (6) monté sur le côté intérieur de la vitre.
